# EUROPÄISCHE PATENTSCHRIFT

(11) **EP 3 733 381 B1**
(45) Veröffentlichungstag und Bekanntmachung des Hinweises auf die Patenterteilung: **24.05.2023**
(21) Anmeldenummer: 20168723.3
(22) Anmeldetag: 08.04.2020
(51) Int. Cl.: B29C 65/02, B65B 7/16, B65B 57/00

(54) **VERFAHREN ZUR ERKENNUNG VON WERKZEUGFEHLSTELLUNG UND VERPACKUNGSMASCHINE**
METHOD FOR DETECTING TOOL MALPOSITION AND PACKAGING MACHINE
PROCÉDÉ DE DÉTECTION D'UN DEFAUT DE POSITION D'OUTIL ET MACHINE D'EMBALLAGE

(30) Priorität: 03.05.2019 DE 102019206389
(43) Veröffentlichungstag der Anmeldung: 04.11.2020
(73) Patentinhaber: MULTIVAC Sepp Haggenmüller SE & Co. KG, 87787 Wolfertschwenden (DE)
(72) Erfinder: GABLER, Albert, 87760 Lachen-Albishofen (DE); HUBER, Michael, 87764 Maria Steinbach (DE); KROPF, Markus, 87437 Kempten (DE)
(74) Vertreter: Grünecker Patent- und Rechtsanwälte PartG mbB

(56) Entgegenhaltungen:
- EP-A1- 3 070 012
- EP-B1- 1 988 024

## Beschreibung

Die Erfindung bezieht sich auf Verpackungsmaschinen mit einem Siegelwerkzeug sowie auf Verfahren zur Optimierung von deren Betrieb.

Verpackungsmaschinen mit Siegelwerkzeugen sind z. B. aus der EP 1 988 024 B1 bekannt. Die dort offenbarte Maschine weist eine Kamera oder einen Sensor zur Messung einer Deckfolienspannung auf, um zu erkennen, wenn ein zu verpackendes Produkt, eine unverschlossene Verpackungsschale oder ein zwischen die Werkzeugkomponenten gelangter Fremdkörper zu einer Beschädigung der Verpackung, des Gutes oder des Siegelwerkzeugs führen könnte.

Diese Lösung eignet sich jedoch schlecht für die Versiegelung von Schalen, die absichtlich mit einem Produkt gefüllt werden, das nach oben über den Schalenrand hinausragt, und beispielsweise mit einer eng an dem Produkt und der Schale anliegenden sogenannten Skinfolie verschlossen werden sollen. In solchen Fällen kann weder eine Kamera und noch weniger ein Sensor zur Erfassung der Deckfolienspannung zuverlässig zwischen dem überstehenden Teil des Produkts und möglichen Fremdkörpern unterscheiden.

In EP 3 070 012 A1 werden eine Schalenversiegelungsmaschine und ein Verfahren zum Erfassen von fehlerhaft in eine Schalenaufnahme eines Siegelwerkzeugunterteils eingelegten Schalen offenbart. Dabei sind in einem Unterwerkzeug Stützteller für die zu versiegelnden Schalen vorgesehen, die eine Prüfvorrichtung zur Erfassung einer Fehlausrichtung der Schale auf dem Stützteller aufweisen, um anhand einer korrekten Lage des Schalenbodens auf dem Stützteller auf eine korrekte Lage der Schale in der Schalenaufnahme rückschließen zu können.

Es ist eine Aufgabe der Erfindung, den Betrieb von Verpackungsmaschinen durch das angeben einer verbesserten Verpackungsmaschine und verbesserten Verfahren weiter zu optimieren.

Diese Aufgabe wird erfindungsgemäß gelöst durch ein Verfahren mit den Merkmalen des Anspruchs 1 oder des Anspruchs 5 sowie durch eine Verpackungsmaschine mit den Merkmalen des Anspruchs 7 oder des Anspruchs 11.

Den nachfolgend noch detaillierter beschriebenen Lösungen ist gemein, dass sie auf der Erfassung der Anwesenheit mindestens zweier Token basieren, die jeweils durch geeignete Sensoren erfassbar ist, wenn sich das Siegelwerkzeug in einer ersten Betriebsposition, z. B. einer geöffneten Position, befindet, und nicht erfassbar sind, wenn sich das Siegelwerkzeug in einer zweiten Betriebsposition, z. B. in einer geschlossenen Position, befindet. Die nachfolgend erläuterten Lösungen können es ermöglichen, zu erkennen, wenn zwischen einem Zeitpunkt, zu dem die Anwesenheit eines ersten der zwei Token nicht mehr erfassbar ist, und einem Zeitpunkt, zu dem die Anwesenheit eines zweiten der zwei Token nicht mehr erfassbar ist, zu viel Zeit verstreicht. Daraus kann dann auf eine Werkzeugfehlstellung geschlossen werden.

In einer der im Folgenden näher erläuterten Lösungen wird dabei eine Zeitspanne erfasst, nachdem die Anwesenheit eines ersten der zwei Sensoren nicht mehr erfassbar ist. In einer weiteren Lösung wird eine Zeitdifferenz zwischen den beiden oben genannten Zeitpunkten bestimmt. Beide Lösungen weisen den Vorteil auf, dass sie auch bei nach oben über den Schalenrand überstehenden Produkten zuverlässig Werkzeugfehlstellungen erkennen können.

Als eine erste Betriebsposition können sämtliche Anordnungen des Siegelwerkzeugs angesehen werden, in denen das Siegelwerkzeug in einem geöffneten Zustand ist, in dem das Oberwerkzeug und das Unterwerkzeug voneinander beabstandet sein können. Dazu kann z. B. eine Wechselposition gehören, die das Siegelwerkzeug unmittelbar nach einem Einsetzen in die Aufnahmevorrichtung einnimmt. Aus dieser Wechselposition kann das Siegelwerkzeug im Rahmen eines Rüstvorgangs, beispielsweise durch Anheben des Unterwerkzeugs bis zum Schließen des Siegelwerkzeugs und darüber hinaus, in eine Montageposition gebracht werden. In dieser kann das Siegelwerkzeug geschlossen sein. Die Montageposition kann eine Montage des Siegelwerkzeugs in der Verpackungsmaschine ermöglichen, z. B. indem eine Werkzeugbefestigungsvorrichtung in Eingriff mit dem Oberwerkzeug gebracht wird. Im Rahmen des beschriebenen Rüstvorgangs kann die Montageposition als zweite Betriebsposition angesehen werden. Als erste Betriebsposition kann im Rahmen des Rüstvorgangs die Wechselposition angesehen werden.

Nachdem die Montage des Siegelwerkzeugs in der Verpackungsmaschine erfolgt ist, kann das Siegelwerkzeug, z. B. durch Absenken des Unterwerkzeugs, in eine Ausgangsposition gebracht werden. In dieser kann das Siegelwerkzeug geöffnet sein. Die Ausgangsposition kann ein Einsetzen der zu verschließenden Schalen in das Siegelwerkzeug, insbesondere in das Unterwerkzeug, ermöglichen. Während eines Produktionsvorgangs kann das Siegelwerkzeug, insbesondere nachdem die Schalen eingesetzt wurden, in eine Siegelposition gebracht werden, z. B. durch Anheben des Unterwerkzeugs. In der Siegelposition kann das Siegelwerkzeug geschlossen sein und ein Ansiegeln einer Deckfolie an die Schalen ermöglicht werden. Die Siegelposition und die Montageposition können ähnlich oder gleich sein. Im Rahmen des beschriebenen Produktionsvorgangs kann die Ausgangsposition als erste Betriebsposition angesehen werden. Als zweite Betriebsposition kann im Rahmen des Produktionsvorgangs die Siegelposition angesehen werden.

Allgemeiner ausgedrückt, kann das Siegelwerkzeug z. B. in einem geöffneten Zustand als in der ersten Betriebsposition angeordnet angesehen werden. In einem geschlossenen Zustand kann das Siegelwerkzeug als in einer zweiten Betriebsposition angeordnet angesehen werden.

Überraschend ergibt sich jedoch noch ein zusätzlicher Vorteil. Bei Siegelwerkzeugen, die mit Passstiften ausgestattet sind, die beim Schließen des Werkzeugs in eine entsprechende Öffnung eintauchen, kann es vorkommen, dass es bei diesem Eintauchen zum Verkanten oder sonstigen Kollisionen, bspw. bei einem fehlerhaften Werkzeug, kommt. Auch durch solche Vorgänge verursachte Werkzeugfehlstellungen können durch die im Folgenden näher erläuterten erfindungsgemäßen Lösungen zuverlässig erkennt werden, was durch konventionelle Verpackungsmaschinen aus dem Stand der Technik nicht möglich ist.

Eine erste Ausführungsform sieht ein Verfahren zum Erkennen einer Werkzeugfehlstellung eines in einer Verpackungsmaschine angeordneten Siegelwerkzeugs vor, wobei an dem Siegelwerkzeug mindestens zwei Token derart angeordnet sind, dass ihre jeweilige Anwesenheit in einer ersten Betriebsposition des Siegelwerkzeugs durch entsprechende Sensoren der Verpackungsmaschine erfassbar und in einer zweiten Betriebsposition nicht erfassbar ist. Das Verfahren umfasst das Erfassen eines ersten Signals von einem ersten der mindestens zwei Sensoren, welches die Anwesenheit eines ersten der mindestens zwei Token anzeigt, Erfassen eines zweiten Signals von einem zweiten der mindestens zwei Sensoren, welches die Anwesenheit eines zweiten der mindestens zwei Token anzeigt, Überwachen des ersten und zweiten Signals, Erfassen eines ersten Signalverlusts eines der ersten und zweiten Signale, Erfassen einer Zeitspanne, welche nach dem ersten Signalverlust verstrichen ist, und Feststellen einer Werkzeugfehlstellung, sobald die erfasste, verstrichene Zeitspanne einen vorbestimmten Wert überschreitet.

Als Token im Sinne der Erfindung sind Gegenstände anzusehen, die eine Erkennung, ein Erfassen oder ein Detektieren desselben durch eine entsprechende Erfassungseinheit, insbesondere durch einen Sensor, ermöglichen oder erleichtern. Z. B. kann ein einfacher Magnet als ein solcher Token fungieren. Denkbar sind außerdem ein maschinell, insbesondere drahtlos, auslesbarer Datenträger, wie z. B. eine RFID-Vorrichtung.

Unter der Überwachung eines oder mehrerer Signale kann im Folgenden die kontinuierliche und/oder wiederholte Prüfung auf das Vorhandensein und/oder von Eigenschaften des jeweiligen Signals verstanden werden. Des Weiteren kann eine Überwachung eine zeitliche Protokollierung umfassen, z. B. indem ein Ergebnis der oben genannten Prüfungen zusammen mit einem Zeitstempel abgespeichert wird.

In einer vorteilhaften Variante wird nur dann eine Werkzeugfehlstellung festgestellt, falls das andere der ersten und zweiten Signale noch vorhanden ist, wenn die erfasste, verstrichene Zeitspanne den vorbestimmten Wert überschritten hat. Dies ermöglicht die Feststellung einer Werkzeugfehlstellung, in der, bspw. aufgrund einer Blockade, einer der beiden Token durch den Sensor erfassbar bleibt und somit kein Signalverlust des anderen der ersten und zweiten Signale erfasst werden kann aber trotzdem eine Werkzeugfehlstellung vorliegt.

Eine weitere Variante kann zusätzlich oder alternativ ein Erfassen eines zweiten Signalverlusts des anderen der ersten und zweiten Signale umfassen. Besonders günstig ist es, wenn das Verfahren dann auch noch ein Beenden der Erfassung der Zeitspanne, sobald der zweite Signalverlust erfasst wurde, umfasst, wobei keine Werkzeugfehlstellung festgestellt wird, falls die Erfassung der Zeitspanne beendet wird, bevor sie den vorbestimmten Wert überschritten hat. Dadurch kann vermieden werden, dass fälschlicherweise Werkzeugfehlstellungen erkannt werden, z. B. in Situationen, in denen die Anwesenheit des ersten bzw. des zweiten Tokens zwar zu unterschiedlichen Zeitpunkten nicht mehr durch die jeweiligen Sensoren erfassbar ist aber der Unterschied so klein ist, dass noch von einer ordnungsgemäßen Funktion des Siegelwerkzeugs ausgegangen werden kann.

Eine weitere Ausführungsform sieht ein Verfahren zum Erkennen einer Werkzeugfehlstellung eines in einer Verpackungsmaschine angeordneten Siegelwerkzeugs vor, wobei an dem Siegelwerkzeug mindestens zwei Token derart angeordnet sind, dass ihre jeweilige Anwesenheit in einer ersten Betriebsposition des Siegelwerkzeugs durch entsprechende Sensoren der Verpackungsmaschine erfassbar und in einer zweiten Betriebsposition nicht erfassbar ist. Das Verfahren umfasst das Erfassen eines ersten Signals von einem ersten der mindestens zwei Sensoren, welches die Anwesenheit eines ersten der mindestens zwei Token anzeigt, Erfassen eines zweiten Signals von einem zweiten der mindestens zwei Sensoren, welches die Anwesenheit eines zweiten der mindestens zwei Token anzeigt, Überwachen des ersten und zweiten Signals, Erfassen eines ersten Signalverlusts eines der ersten und zweiten Signale, Erfassen eines zweiten Signalverlusts des anderen der ersten und zweiten Signale, Bestimmen einer Zeitdifferenz zwischen einem Zeitpunkt des ersten Signalverlusts und dem Zeitpunkt des zweiten Signalverlusts, und Feststellen einer Werkzeugfehlstellung, falls die bestimmte Zeitdifferenz einen vorbestimmten Wert überschreitet.

Eine vorteilhafte Variante kann ein Anhalten eines Schließvorgangs des Siegelwerkzeugs, welcher das Siegelwerkzeug von der ersten Betriebsposition in die zweite Betriebsposition bringt, umfassen, wenn eine Werkzeugfehlstellung festgestellt wurde. Auf diese Weise können möglicherweise durch Werkzeugfehlstellungen verursachte Beschädigungen des Produkts, der Schale und/oder des Siegelwerkzeugs verringert oder gänzlich vermieden werden.

Die Erfindung bezieht sich auch auf eine Verpackungsmaschine, umfassend ein Gestell mit einer Aufnahmevorrichtung für ein Siegelwerkzeug, in welcher das Siegelwerkzeug austauschbar montierbar ist. An der Aufnahmevorrichtung sind mindestens zwei Sensoren angeordnet, die dazu konfiguriert sind, die Anwesenheit jeweils eines von mindestens zwei an dem Siegelwerkzeug angeordneten Token zu erfassen, wenn das Siegelwerkzeug in einer ersten Betriebsposition angeordnet ist, wobei die Anwesenheit der Token in einer zweiten Betriebsposition des Siegelwerkzeugs nicht durch die Sensoren erfassbar ist. Ein erster der mindestens zwei Sensoren ist dazu konfiguriert, ein erstes Signal auszugeben, welches die erfasste Anwesenheit eines ersten der mindestens zwei Token anzeigt. Ein zweiter der mindestens zwei Sensoren ist dazu konfiguriert, ein zweites Signal auszugeben, welches die erfasste Anwesenheit eines zweiten der mindestens zwei Token anzeigt. Die Sensoren sind dazu konfiguriert, das erste und das zweite Signal nur dann auszugeben, wenn die Anwesenheit des jeweiligen Tokens erfasst wird. Die Verpackungsmaschine ist dazu konfiguriert, das erste Signal und das zweite Signal zu überwachen, einen Signalverlust eines der ersten und zweiten Signale und eine Zeitspanne zu erfassen, welche nach dem ersten Signalverlust verstrichen ist. Die Verpackungsmaschine ist des Weiteren dazu konfiguriert, eine Werkzeugfehlstellung festzustellen, falls die bestimmte Zeitdifferenz einen vorbestimmten Wert überschreitet.

In einer vorteilhaften Variante kann die Verpackungsmaschine dazu konfiguriert sein, nur dann eine Werkzeugfehlstellung festzustellen, falls das andere der ersten und zweiten Signale noch vorhanden ist, wenn die erfasste, verstrichene Zeitspanne den vorbestimmten Wert überschritten hat. Dies ermöglicht die Feststellung einer Werkzeugfehlstellung, in der, bspw. aufgrund einer Blockade, einer der beiden Token durch den Sensor erfassbar bleibt und somit kein Signalverlust des anderen der ersten und zweiten Signale erfasst werden kann aber trotzdem eine Werkzeugfehlstellung vorliegt.

In einer weiteren Variante kann die Verpackungsmaschine zusätzlich oder alternativ dazu konfiguriert sein, einen zweiten Signalverlust des anderen der ersten und zweiten Signale zu erfassen. Besonders günstig ist es, wenn die Verpackungsmaschine dazu konfiguriert ist, die Erfassung der Zeitspanne zu beenden, sobald der zweite Signalverlust erfasst wurde, wobei keine Werkzeugfehlstellung festgestellt wird, falls die Erfassung der Zeitspanne beendet wird, bevor sie den vorbestimmten Wert überschritten hat. Dadurch kann vermieden werden, dass fälschlicherweise Werkzeugfehlstellungen erkannt werden, z. B. in Situationen, in denen die Anwesenheit des ersten bzw. des zweiten Tokens zwar zu unterschiedlichen Zeitpunkten nicht mehr durch die jeweiligen Sensoren erfassbar ist aber der Unterschied so klein ist, dass noch von einer ordnungsgemäßen Funktion des Siegelwerkzeugs ausgegangen werden kann.

Eine weitere Ausführungsform sieht eine Verpackungsmaschine, umfassend ein Gestell mit einer Aufnahmevorrichtung für ein Siegelwerkzeug, in welcher das Siegelwerkzeug austauschbar montierbar ist, vor. An der Aufnahmevorrichtung sind mindestens zwei Sensoren angeordnet, die dazu konfiguriert sind, die Anwesenheit jeweils eines von mindestens zwei an dem Siegelwerkzeug angeordneten Token zu erfassen, wenn das Siegelwerkzeug in einer ersten Betriebsposition angeordnet ist, wobei die Anwesenheit der Token in einer zweiten Betriebsposition des Siegelwerkzeugs nicht durch die Sensoren erfassbar ist. Ein erster der mindestens zwei Sensoren ist dazu konfiguriert, ein erstes Signal auszugeben, welches die erfasste Anwesenheit eines ersten der mindestens zwei Token anzeigt. Ein zweiter der mindestens zwei Sensoren ist dazu konfiguriert, ein zweites Signal auszugeben, welches die erfasste Anwesenheit eines zweiten der mindestens zwei Token anzeigt. Die Sensoren sind dazu konfiguriert, das erste und das zweite Signal nur dann auszugeben, wenn die Anwesenheit des jeweiligen Tokens erfasst wird. Die Verpackungsmaschine ist dazu konfiguriert, das erste Signal und das zweite Signal zu überwachen, einen ersten Signalverlust eines der ersten und zweiten Signale und einen zweiten Signalverlust des anderen der ersten und zweiten Signale zu erfassen und eine Zeit-differenz zwischen einem Zeitpunkt des ersten Signalverlusts und einem Zeitpunkt des zweiten Signalverlusts zu bestimmen. Die Verpackungsmaschine ist des Weiteren dazu konfiguriert, eine Werkzeugfehlstellung festzustellen, falls die bestimmte Zeit-differenz einen vorbestimmten Wert überschreitet.

In einer vorteilhaften Variante ist die Verpackungsmaschine dazu konfiguriert, einen Schließvorgang des Siegelwerkzeugs, welcher das Siegelwerkzeug von der ersten Betriebsposition in die zweite Betriebsposition bringt anzuhalten, wenn eine Werkzeugfehlstellung festgestellt wurde. Auf diese Weise können möglicherweise durch Werkzeugfehlstellungen verursachte Beschädigungen des Produkts, der Schale und/oder des Siegelwerkzeugs verringert oder gänzlich vermieden werden.

In sämtlichen Ausführungsformen ist es denkbar, dass mehr als zwei Token und entsprechend dazu mehr als zwei Sensoren vorgesehen sind. Dadurch kann es ermöglicht werden, ein breiteres Spektrum an Werkzeugfehlstellungen zu erkennen. Die Token können in einer parallel zu einer Produktionsrichtung verlaufenden Richtung beabstandet sein. Alternativ oder zusätzlich können die Token in einer senkrecht zu einer Produktionsrichtung verlaufenden Richtung beabstandet sein. Für die jeweiligen Sensoren gilt entsprechendes. Als Produktionsrichtung kann eine Richtung angesehen werden, in der die zu produzierenden Verpackungen durch die Verpackungsmaschine gefördert werden.

Die Erfindung bezieht sich auf Verfahren sowie Verpackungsmaschinen der vorstehend beschriebenen Art. Im Folgenden wird ein vorteilhaftes Ausführungsbeispiel anhand von Zeichnungen näher erläutert.
- Figur 1: zeigt eine schematische Perspektivansicht einer Verpackungsmaschine.
- Figur 2: zeigt eine schematische Perspektivansicht eines Siegelwerkzeugs in einem geöffneten Zustand.
- Figur 3: zeigt eine schematische Perspektivansicht eines Siegelwerkzeugs in einem geschlossenen Zustand.
- Figur 4: zeigt eine schematische Seitenansicht einer Verschließstation einer Verpackungsmaschine mit einem geöffneten Siegelwerkzeug.
- Figur 5: zeigt eine schematische Seitenansicht einer Verschließstation einer Verpackungsmaschine mit einem geschlossenen Siegelwerkzeug.

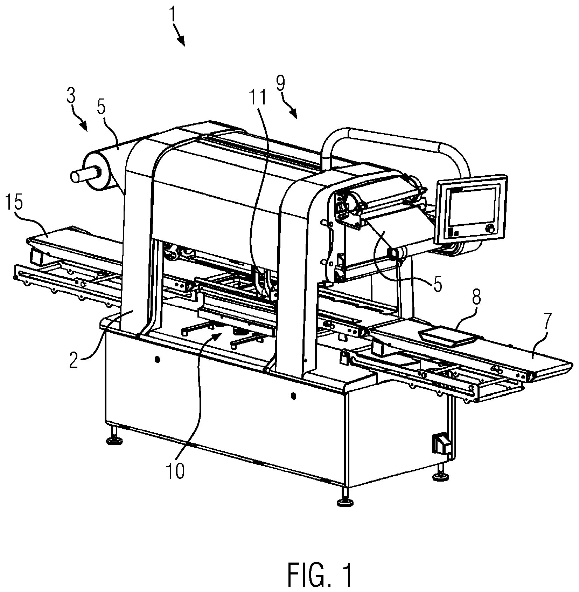

Fig. 1 zeigt ein Beispiel für eine Verpackungsmaschine 1, die, wie im vorliegenden Beispiel, eine Schalenverschließmaschine sein kann. Sie kann ein Gestell 2 umfassen. Die Verpackungsmaschine 1 kann des Weiteren ein Zuführband 7 aufweisen. Sie kann außerdem eine Verschließstation 9 aufweisen. Durch das Zuführband 7 können befüllte aber zu diesem Zeitpunkt noch unverschlossene Schalen 8 zu der Verschließstation 9 befördert werden. Die Schalen 8 können mit einer Greifereinrichtung 11 in die Verschließstation 9 umgesetzt werden und dort mit einer von oben zugeführten Deckfolie 5 (Folie) verschlossen werden, beispielsweise durch Ansiegeln der Deckfolie 5. Zu diesem Zweck kann die Verschließstation 9 ein Siegelwerkzeug 10 umfassen, das später noch näher beschrieben werden wird. Die derart fertiggestellten Verpackungen können über die Greifereinrichtung 11 aus der Verschließstation 9 auf ein Abführband 15 umgesetzt werden.

Nach dem Ansiegeln der Deckfolie 5 können den Verpackungen bzw. Verpackungsverbünden entsprechende Bereiche der Deckfolie 5 in der Verschließstation 9 aus der Bahn der Deckfolie 5 ausgeschnitten werden. Es verbleibt ein Folienrestgitter der Deckfolie 5, welches mit einer Vorrichtung 3 zum Aufwickeln der Folie 5 aufgewickelt wird.

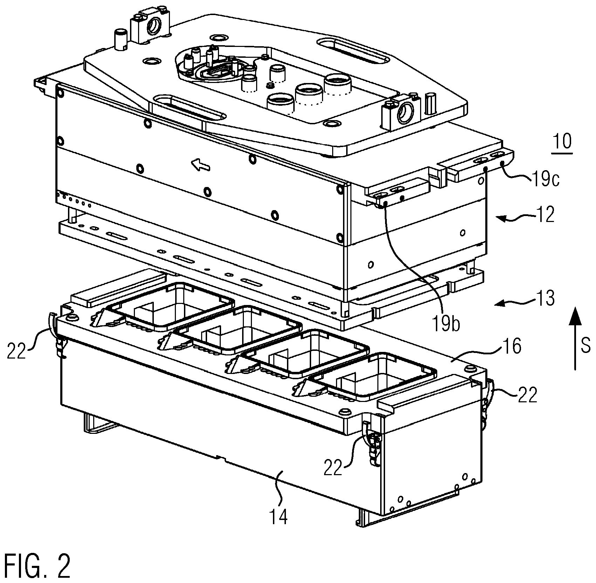

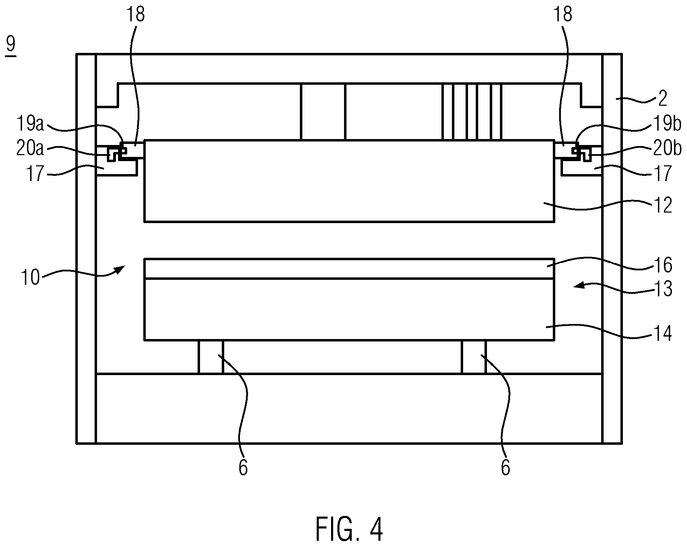

In Figur 2 ist das Siegelwerkzeug 10 in einer perspektivischen Ansicht zu sehen. Wie im gezeigten Ausführungsbeispiel kann das Siegelwerkzeug 10 ein Oberwerkzeug 12 und ein Unterwerkzeug 13 umfassen. Diese können in einer Schließrichtung S aufeinander zu bewegt werden, um so das Siegelwerkzeug 10 zu schließen. Das Unterwerkzeug 13 kann, wie in der Figur dargestellt, einen Hauptkörper 14 enthalten. Dieser kann beispielsweise auf ein Hubwerk 6 (s. Figur 4) montiert sein, das dazu konfiguriert sein kann, das Unterwerkzeug 13 in der Schließrichtung S auf das Oberwerkzeug 12 zu zu bewegen. Auf dem Hauptkörper 14 kann ein Schalenträger 16 angeordnet sein, der zum Aufnehmen der Schalen 8 konfiguriert ist. Der Schalenträger 16 kann durch Befestigungsvorrichtungen 22, die vorzugsweise werkzeuglos bedienbar sein können, an dem Hauptkörper 14 gehalten werden.

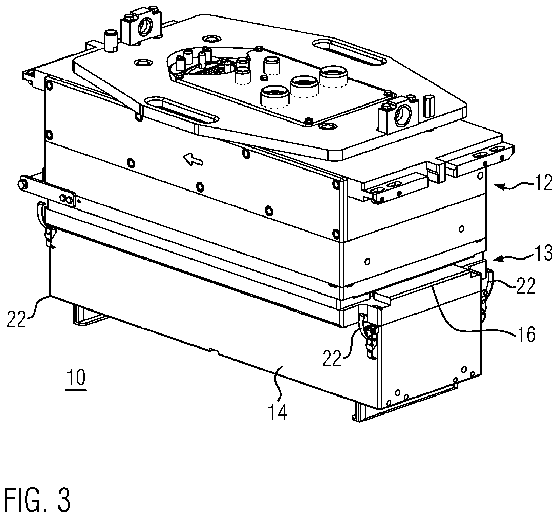

Der Fachmann erkennt, dass Figur 2 einen geöffneten Zustand des Siegelwerkzeugs 10 zeigt. Dieser Zustand kann als Beispiel für eine erste Betriebsposition angesehen werden. In Figur 3 ist das Siegelwerkzeug 10 in einem geschlossenen Zustand dargestellt. Dieser Zustand kann als Beispiel für eine zweite Betriebsposition angesehen werden.

Figur 4 zeigt eine schematische Seitenansicht der Verschließstation 9. Der in dieser Ansicht geöffnete Zustand des Siegelwerkzeugs 10 kann als Beispiel für eine erste Betriebsposition angesehen werden, wie weiter unten noch näher erläutert werden wird. Wie ebenfalls zu erkennen ist, kann an dem Gestell 2 eine Aufnahmevorrichtung 17 angebracht sein. Diese kann dazu eingerichtet sein, Halteeinrichtungen 18 aufzunehmen, die an dem Siegelwerkzeug 10, vorzugsweise an dem Oberwerkzeug 12, angeordnet sein können. Dadurch kann das Oberwerkzeug 12 und/oder das gesamte Siegelwerkzeug 10 zumindest zeitweise relativ zu dem Gestell 2 gehalten werden.

An dem Siegelwerkzeug 10, bevorzugt an dem Oberwerkzeug 12, besonders bevorzugt an den Halteeinrichtungen 18 können ein erster Token 19a und ein zweiter Token 19b angeordnet sein. An dem Gestell 2, vorzugsweise an der Aufnahmevorrichtung 17 können ein erster Sensor 20a und ein zweiter Sensor 20b angeordnet sein. In weiteren Ausführungsbeispielen kann ein zusätzlicher Token 19c (siehe Fig. 2) vorgesehen sein. Es sind ebenfalls Ausführungsformen denkbar, in denen der Token 19c alternativ zu einem der Token 19a oder 19b vorgesehen ist. Entsprechendes gilt für Sensoren, durch die der jeweilige Token erfassbar ist.

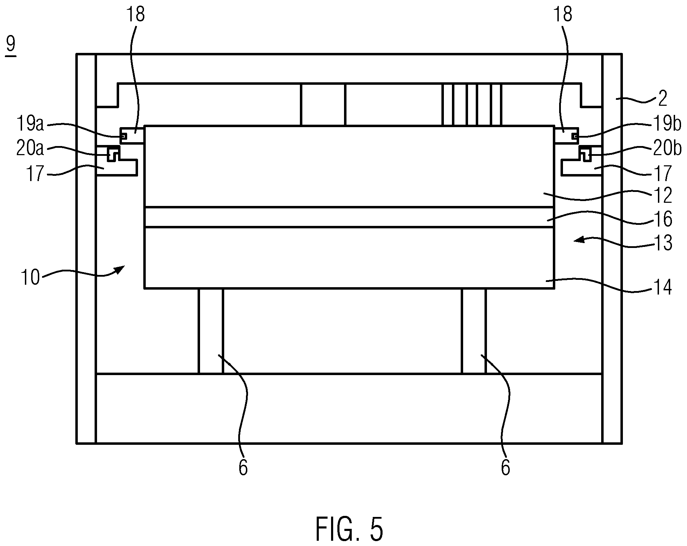

Wie in Figur 4 zu sehen, können die Token 19a, 19b und die Sensoren 20a, 20b derart angeordnet sein, dass in einer ersten Betriebsposition des Siegelwerkzeugs 10, wie zum Beispiel der dargestellten geöffneten Position, beide der Token 19a, 19b durch die Sensoren 20a, 20b erfassbar sind, und in einer zweiten Betriebsposition des Siegelwerkzeugs 10, wie zum Beispiel der in Figur 5 dargestellten geöffneten Position, keiner der Token 19a, 19b durch die Sensoren 20a, 20b erfassbar ist.

In Figur 5 ist eine schematische Seitenansicht ähnlich der in Figur 4 gezeigten dargestellt. Hier wurde jedoch das Unterwerkzeug 13 durch das Hubwerk 6 angehoben und das Siegelwerkzeug 10 geschlossen. Es kann vorgesehen sein, dass das Oberwerkzeug 12 beim Schließen des Siegelwerkzeugs 10 gegenüber der Aufnahmevorrichtung 17 angehoben wird. Dies kann dazu führen, dass das Oberwerkzeug 12 in einer zweiten Betriebsposition, wie z. B. der in Figur 5 dargestellten, gegenüber dem Gestell 2, vorzugsweise gegenüber der Aufnahmevorrichtung 17, angehoben ist.

Während eines ordnungsgemäßen Betriebs der Verpackungsmaschine 1 kann das Anheben des Siegelwerkzeugs 10, insbesondere des Oberwerkzeugs 12, derart erfolgen, dass die Token 19a, 19b im Wesentlichen gleichzeitig nicht mehr durch die Sensoren 20a, 20b erfassbar sind bzw. werden. Eine kleine Zeitspanne bzw. Zeitdifferenz zwischen dem Nicht-Erfassen des ersten Tokens 19a und dem Nicht-Erfassen des zweiten Tokens 19b kann, beispielsweise aufgrund von Toleranzen, als im Wesentlichen gleichzeitig gelten.

Wenn z. B. ein Fremdkörper zwischen dem Oberwerkzeug 12 und dem Unterwerkzeug 13 auf der in den Figuren 4 und 5 links dargestellten Seite dazu führt, dass das Oberwerkzeug 12 auf dieser Seite früher angehoben wird als auf der in den Figuren 4 und 5 rechts dargestellten Seite, kann sich durch die erfindungsgemäße Konfiguration zwischen dem Nicht-Erfassen des ersten Tokens 19a und dem Nicht-Erfassen des zweiten Tokens 19b eine größere Zeitdifferenz einstellen.

Durch die erfindungsgemäße Anordnung der Sensoren 20a, 20b sowie der Token 19a, 19b kann die Verpackungsmaschine 1, z. B. durch eine entsprechend konfigurierte Auswertungseinheit, die oben erläuterte Zeitspanne bzw. Zeitdifferenz erkennen und daraus auf eine Werkzeugfehlstellung schließen.

Konkret kann der erste Sensor 20a dazu konfiguriert sein, ein erstes Signal auszugeben, welches die erfasste Anwesenheit des ersten Tokens 19a anzeigt, wenn der erste Token 19a durch den ersten Sensor 20a erfassbar ist. Der zweite Sensor 20b kann dazu konfiguriert sein, ein zweites Signal auszugeben, welches die erfasste Anwesenheit des zweiten Tokens 19b anzeigt, wenn der zweite Token 19b durch den zweiten Sensor 20b erfassbar ist. Beide Sensoren 20a, 20b können dazu konfiguriert sein, das jeweilige Signal nur dann auszugeben, wenn der jeweilige Token 19a, 19b erfassbar ist.

Das erste und das zweite Signal können durch geeignete Vorrichtungen der Verpackungsmaschine 1, z.B. eine Auswertungseinheit, empfangen und/oder erfasst werden. Wenn die Auswertungseinheit ein Signal nicht mehr empfängt, kann ein Signalverlust erfasst werden. Zum Feststellen einer Werkzeugfehlstellung müssen nicht zwingend zwei Signalverluste von unterschiedlichen Sensoren erfasst werden. Wird z. B. das Oberwerkzeug 12 auf der in Figur 4 links gezeigten Seite derart angehoben, dass der erste Token 19a bereits nicht mehr durch den ersten Sensor 20a erfassbar ist, der zweite Token 19b aber noch durch den zweiten Sensor 20b erfassbar ist, genügt es einen ersten Signalverlust zu erfassen. Danach kann eine vorbestimmte Zeitspanne abgewartet werden, ob, wie im ordnungsgemäßen Betrieb, auch ein zweiter Signalverlust eintritt, der noch als im Wesentlichen gleichzeitig (s.o.) mit dem ersten Signalverlust angesehen werden kann. Ist dies nicht der Fall kann eine Werkzeugfehlstellung festgestellt werden. Um fehlerhafte Feststellungen zu vermeiden, kann geprüft werden, ob das zweite Signal bei Ablaufen der vorbestimmten Zeitspanne noch vorhanden ist.

In weiteren Ausführungsformen können alternativ oder zusätzlich zunächst zwei Signalverluste abgewartet werden, um dann eine Zeitdifferenz zwischen den Zeitpunkten des ersten und des zweiten der beiden Signalverluste zu bestimmen. Falls diese Zeitdifferenz einen vorbestimmten Wert überschreitet, kann eine Werkzeugfehlstellung festgestellt werden.

## Patentansprüche

1. Verfahren zum Erkennen einer Werkzeugfehlstellung eines in einer Verpackungsmaschine (1) angeordneten Siegelwerkzeugs (10), **dadurch gekennzeichnet, dass** an dem Siegelwerkzeug (10) mindestens zwei Token (19a, 19b) derart angeordnet sind, dass ihre jeweilige Anwesenheit in einer ersten Betriebsposition des Siegelwerkzeugs (10) durch entsprechende Sensoren (20a, 20b) der Verpackungsmaschine (1) erfassbar und in einer zweiten Betriebsposition nicht erfassbar ist, umfassend:
Erfassen eines ersten Signals von einem ersten der mindestens zwei Sensoren (20a, 20b), welches die Anwesenheit eines ersten der mindestens zwei Token (19a, 19b) anzeigt,
Erfassen eines zweiten Signals von einem zweiten der mindestens zwei Sensoren (20a, 20b), welches die Anwesenheit eines zweiten der mindestens zwei Token (19a, 19b) anzeigt, Überwachen des ersten und zweiten Signals,
Erfassen eines ersten Signalverlusts eines der ersten und zweiten Signale,
Erfassen einer Zeitspanne, welche nach dem ersten Signalverlust verstrichen ist,
Feststellen einer Werkzeugfehlstellung, sobald die erfasste, verstrichene Zeitspanne einen vorbestimmten Wert überschreitet.

2. Verfahren nach Anspruch 1, wobei nur dann eine Werkzeugfehlstellung festgestellt wird, falls das andere der ersten und zweiten Signale noch vorhanden ist, wenn die erfasste, verstrichene Zeitspanne den vorbestimmten Wert überschritten hat.

3. Verfahren nach einem der vorangehenden Ansprüche, weiter umfassend Erfassen eines zweiten Signalverlusts des anderen der ersten und zweiten Signale.

4. Verfahren nach Anspruch 3, weiter umfassend Beenden der Erfassung der Zeitspanne, sobald der zweite Signalverlust erfasst wurde, wobei keine Werkzeugfehlstellung festgestellt wird, falls die Erfassung der Zeitspanne beendet wird, bevor sie den vorbestimmten Wert überschritten hat.

5. Verfahren zum Erkennen einer Werkzeugfehlstellung eines in einer Verpackungsmaschine (1) angeordneten Siegelwerkzeugs (10), **dadurch gekennzeichnet, dass** an dem Siegelwerkzeug (10) mindestens zwei Token (19a, 19b) derart angeordnet sind, dass ihre jeweilige Anwesenheit in einer ersten Betriebsposition des Siegelwerkzeugs (10) durch entsprechende Sensoren (20a, 20b) der Verpackungsmaschine (1) erfassbar und in einer zweiten Betriebsposition nicht erfassbar ist, umfassend:
Erfassen eines ersten Signals von einem ersten der mindestens zwei Sensoren (20a, 20b), welches die Anwesenheit eines ersten der mindestens zwei Token (19a, 19b) anzeigt,
Erfassen eines zweiten Signals von einem zweiten der mindestens zwei Sensoren (20a, 20b), welches die Anwesenheit eines zweiten der mindestens zwei Token (19a, 19b) anzeigt,
Überwachen des ersten und zweiten Signals,
Erfassen eines ersten Signalverlusts eines der ersten und zweiten Signale,
Erfassen eines zweiten Signalverlusts des anderen der ersten und zweiten Signale,
Bestimmen einer Zeitdifferenz zwischen einem Zeitpunkt des ersten Signalverlusts und dem Zeitpunkt des zweiten Signalverlusts,
Feststellen einer Werkzeugfehlstellung, falls die bestimmte Zeitdifferenz einen vorbestimmten Wert überschreitet.

6. Verfahren nach einem der vorangehenden Ansprüche, weiter umfassend Anhalten eines Schließvorgangs des Siegelwerkzeugs (10), welcher das Siegelwerkzeug (10) von der ersten Betriebsposition in die zweite Betriebsposition bringt, wenn eine Werkzeugfehlstellung festgestellt wurde.

7. Verpackungsmaschine (1), umfassend ein Gestell (2) mit einer Aufnahmevorrichtung (17) für ein Siegelwerkzeug (10), in welcher das Siegelwerkzeug (10) austauschbar montierbar ist,
**dadurch gekennzeichnet, dass** an der Aufnahmevorrichtung (17) mindestens zwei Sensoren (20a, 20b) angeordnet sind, die dazu konfiguriert sind, die Anwesenheit jeweils eines von mindesten zwei an dem Siegelwerkzeug (10) angeordneten Token (19a, 19b) zu erfassen, wenn das Siegelwerkzeug (10) in einer ersten Betriebsposition angeordnet ist, wobei die Anwesenheit der Token (19a, 19b) in einer zweiten Betriebsposition des Siegelwerkzeugs (10) nicht durch die Sensoren (20a, 20b) erfassbar ist,
wobei ein erster der mindestens zwei Sensoren (20a, 20b) dazu konfiguriert ist, ein erstes Signal auszugeben, welches die erfasste Anwesenheit eines ersten der mindestens zwei Token (19a, 19b) anzeigt, und ein zweiter der mindestens zwei Sensoren (20a, 20b) dazu konfiguriert ist, ein zweites Signal auszugeben, welches die erfasste Anwesenheit eines zweiten der mindestens zwei Token (19a, 19b) anzeigt, wobei die Sensoren (20a, 20b) dazu konfiguriert sind, das erste und das zweite Signal nur dann auszugeben, wenn die Anwesenheit des jeweiligen Tokens (19a, 19b) erfasst wird,
wobei die Verpackungsmaschine (1) dazu konfiguriert ist, das erste Signal und das zweite Signal zu überwachen, einen Signalverlust eines der ersten und zweiten Signale und eine Zeitspanne zu erfassen, welche nach dem ersten Signalverlust verstrichen ist, wobei die Verpackungsmaschine (1) des Weiteren dazu konfiguriert ist, eine Werkzeugfehlstellung festzustellen, falls die erfasste Zeitspanne einen vorbestimmten Wert überschreitet.

8. Verpackungsmaschine nach Anspruch 7, wobei die Verpackungsmaschine (1) dazu konfiguriert ist, nur dann eine Werkzeugfehlstellung festzustellen, falls das andere der ersten und zweiten Signale noch vorhanden ist, wenn die erfasste, verstrichene Zeitspanne den vorbestimmten Wert überschritten hat.

9. Verpackungsmaschine nach einem der Ansprüche 7 oder 8, wobei die Verpackungsmaschine (1) dazu konfiguriert ist, einen zweiten Signalverlust des anderen der ersten und zweiten Signale zu erfassen.

10. Verpackungsmaschine nach Anspruch 9, wobei die Verpackungsmaschine (1) dazu konfiguriert ist, die Erfassung der Zeitspanne zu beenden, sobald der zweite Signalverlust erfasst wurde, wobei keine Werkzeugfehlstellung festgestellt wird, falls die Erfassung der Zeitspanne beendet wird, bevor sie den vorbestimmten Wert überschritten hat.

11. Verpackungsmaschine (1), umfassend ein Gestell (2) mit einer Aufnahmevorrichtung (17) für ein Siegelwerkzeug (10), in welcher das Siegelwerkzeug (10) austauschbar montierbar ist,
**dadurch gekennzeichnet, dass** an der Aufnahmevorrichtung mindestens zwei Sensoren (20a, 20b) angeordnet sind, die dazu konfiguriert sind, die Anwesenheit jeweils eines von mindesten zwei an dem Siegelwerkzeug (10) angeordneten Token (19a, 19b) zu erfassen, wenn das Siegelwerkzeug (10) in einer ersten Betriebsposition angeordnet ist, wobei die Anwesenheit der Token (19a, 19b) in einer zweiten Betriebsposition des Siegelwerkzeugs (10) nicht durch die Sensoren (20a, 20b) erfassbar ist,
wobei ein erster der mindestens zwei Sensoren (20a, 20b) dazu konfiguriert ist, ein erstes Signal auszugeben, welches die erfasste Anwesenheit eines ersten der mindestens zwei Token (19a, 19b) anzeigt, und ein zweiter der mindestens zwei Sensoren dazu konfiguriert ist, ein zweites Signal auszugeben, welches die erfasste Anwesenheit eines zweiten der mindestens zwei Token (19a, 19b) anzeigt, wobei die Sensoren (20a, 20b) dazu konfiguriert sind, das erste und das zweite Signal nur dann auszugeben, wenn die Anwesenheit des jeweiligen Tokens (19a, 19b) erfasst wird,
wobei die Verpackungsmaschine (1) dazu konfiguriert ist, das erste Signal und das zweite Signal zu überwachen, einen ersten Signalverlust eines der ersten und zweiten Signale und einen zweiten Signalverlust des anderen der ersten und zweiten Signale zu erfassen und eine Zeitdifferenz zwischen einem Zeitpunkt des ersten Signalverlusts und einem Zeitpunkt des zweiten Signalverlusts zu bestimmen, wobei die Verpackungsmaschine (1) des Weiteren dazu konfiguriert ist, eine Werkzeugfehlstellung festzustellen, falls die bestimmte Zeitdifferenz einen vorbestimmten Wert überschreitet.

12. Verpackungsmaschine nach einem der Ansprüche 7 bis 11, wobei die Verpackungsmaschine (1) dazu konfiguriert ist, einen Schließvorgang des Siegelwerkzeugs (1), welcher das Siegelwerkzeug (10) von der ersten Betriebsposition in die zweite Betriebsposition bringt, anzuhalten, wenn eine Werkzeugfehlstellung festgestellt wurde.

## Claims

1. Method for detecting a tool malpositioning of a sealing tool (10) arranged in a packaging machine (1), **characterized in that** at least two tokens (19a, 19b) are disposed at the sealing tool (10) in such a way that in a first operating position of the sealing tool (10), their respective presence is detectable by corresponding sensors (20a, 20b) of the packaging machine (1) and is not detectable in a second operating position, the method comprising:
Detecting a first signal from a first one of the at least two sensors (20a, 20b), the first signal indicating the presence of a first one of the at least two tokens (19a, 19b),
Detecting a second signal from a second one of the at least two sensors (20a, 20b), the second signal indicating the presence of a second one of the at least two tokens (19a, 19b,
Monitoring the first and the second signal,
Detecting a first signal loss of one of the first and second signals,
Capturing a time span, which elapsed after the first signal loss,
Determining a tool malpositioning once the captured elapsed time span exceeds a predetermined value.

2. Method according to claim 1, wherein a tool malpositioning is determined only if the other one of the first and second signals is still present when the captured elapsed time span has exceeded the predetermined value.

3. Method according to one of the preceding claims, further comprising detecting a second signal loss of the other one of the first and second signals.

4. Method according to claim 3, further comprising terminating the capturing of the time span once the second signal loss has been detected, wherein no tool malpositioning is determined if the capturing of the time span is terminated before it has exceeded the predetermined value.

5. Method for detecting a tool malpositioning of a sealing tool (10) arranged in a packaging machine (1), **characterized in that** at least two tokens (19a, 19b) are disposed at the sealing tool (10) in such a way that in a first operating position of the sealing tool (10), their respective presence is detectable by corresponding sensors (20a, 20b) of the packaging machine (1) and is not detectable in a second operating, the method comprising:
Detecting a first signal from a first one of the at least two sensors (20a, 20b), the first signal indicating the presence of a first one of the at least two tokens (19a, 19b),
Detecting a second signal from a second one of the at least two sensors (20a, 20b), the second signal indicating the presence of a second one of the at least two tokens (19a, 19b,
Monitoring the first and the second signal,
Detecting a first signal loss of one of the first and second signals,
Detecting a second signal loss of the other one of the first and second signals,
Determining time lag between a time of the first signal loss and a time of the second signal loss,
Determining a tool malpositioning, if the determined time lag exceeds a predetermined value.

6. Method according to one of the preceding claims, further comprising halting a closing process of the sealing tool (10), when a tool malpositioning has been determined, said closing process bringing the sealing tool (10) from the first operating position into the second operating position.

7. Packaging machine (1), comprising a frame (2) having a receiving device (17) for a sealing tool (10), in which the sealing tool (10) is replaceably mountable,
**characterized in that** at least two sensors (20a, 20b) are disposed at the receiving device (17), the at least two sensors (20a, 20b) each being configured to detect the presence of one of at least two tokens (19a, 19b) arranged at the sealing tool (10), when the sealing tool (10) is arranged in a first operating position, wherein the presence of the tokens (19a, 19b) is not detectable by the sensors (20a, 20b) in a second operating position of the sealing tool (10),
wherein a first one of the at least two sensors (20a, 20b) is configured to output a first signal, which indicates the detected presence of a first one of the at least two tokens (19a, 19b), and a second one of the at least two sensors (20a, 20b) is configured to output a second signal, which indicates the detected presence of a second one of the at least two tokens (19a, 19b), wherein the sensors (20a, 20b) are configured to output the first and second signal only when the presence of the respective token (19a, 19b) is detected,
wherein the packaging machine (1) is configured to monitor the first and second signals, detect a signal loss of one of the first and second signals and capture a time span, which has elapsed after the first signal loss, wherein the packaging machine (1) is further configured to determine a tool malpositioning if the captured time span exceeds a predetermined value.

8. Packaging machine according to claim 7, wherein the packaging machine (1) is configured to determine a tool malpositioning is only if the other one of the first and second signals is still present when the captured elapsed time span has exceeded the predetermined value.

9. Packaging machine according to one of claims 7 or 8, wherein the packaging machine (1) is configured to detect a second signal loss of the other one of the first and second signals.

10. Packaging machine according to claim 9, wherein the packaging machine (1) is configured to terminate the capturing of the time span once the second signal loss has been detected, wherein no tool malpositioning is determined if the capturing of the time span is terminated before it has exceeded the predetermined value.

11. Packaging machine (1), comprising a frame (2) having a receiving device (17) for a sealing tool (10), in which the sealing tool (10) is replaceably mountable,
**characterized in that** at least two sensors (20a, 20b) are disposed at the receiving device (17), the at least two sensors (20a, 20b) each being configured to detect the presence of one of at least two tokens (19a, 19b) arranged at the sealing tool (10), when the sealing tool (10) is arranged in a first operating position, wherein the presence of the tokens (19a, 19b) is not detectable by the sensors (20a, 20b) in a second operating position of the sealing tool (10),
wherein a first one of the at least two sensors (20a, 20b) is configured to output a first signal, which indicates the detected presence of a first one of the at least two tokens (19a, 19b), and a second one of the at least two sensors (20a, 20b) is configured to output a second signal, which indicates the detected presence of a second one of the at least two tokens (19a, 19b), wherein the sensors (20a, 20b) are configured to output the first and second signal only when the presence of the respective token (19a, 19b) is detected,
wherein the packaging machine (1) is configured to monitor the first and second signals, detect a first signal loss of one of the first and second signals and a second signal loss of the other one of the first and second signals and determine a time lag between a time of the first signal loss and a time of the second signal loss, wherein the packaging machine (1) is further configured to determine a tool malpositioning if the determined time lag exceeds a predetermined value.

12. Packaging machine according to one of claims 7 to 11, wherein the packaging machine (1) is configured to halt a closing process of the sealing tool (1), when a tool malpositioning has been determined, said closing process bringing the sealing tool (10) from the first operating position into the second operating position.

## Revendications

1. Procédé de détection d'une mauvaise position d'outil d'un outil de scellage (10) agencé dans une machine d'emballage (1), **caractérisé en ce qu'**au moins deux jetons (19a, 19b) sont agencés sur l'outil de scellage (10) de telle sorte que leur présence respective dans une première position de fonctionnement de l'outil de scellage (10) peut être détectée par des capteurs correspondants (20a, 20b) de la machine d'emballage (1) et ne peut pas être détectée dans une seconde position de fonctionnement, comprenant les étapes consistant à :
détecter un premier signal provenant d'un premier des au moins deux capteurs (20a, 20b) indiquant la présence d'un premier des au moins deux jetons (19a, 19b),
détecter un second signal provenant d'un second des au moins deux capteurs (20a, 20b), qui indique la présence d'un second des au moins deux jetons (19a, 19b),
surveiller les premier et second signaux,
détecter une première perte de signal de l'un des premier et second signaux,
détecter une période de temps qui s'est écoulée après la première perte de signal,
détecter une mauvaise position d'outil dès que la période de temps écoulée détectée dépasse une valeur prédéterminée.

2. Procédé selon la revendication 1, dans lequel une mauvaise position d'outil n'est détectée que si l'autre des premier et second signaux est encore présent lorsque la période de temps écoulée détectée a dépassé la valeur prédéterminée.

3. Procédé selon l'une quelconque des revendications précédentes, comprenant en outre la détection d'une seconde perte de signal de l'autre des premier et second signaux.

4. Procédé selon la revendication 3, comprenant en outre l'arrêt de la détection de la période de temps une fois que la seconde perte de signal a été détectée, dans lequel aucune mauvaise position d'outil n'est détectée si la détection de la période de temps est arrêtée avant d'avoir dépassé la valeur prédéterminée.

5. Procédé de détection d'une mauvaise position d'outil d'un outil de scellage (10) agencé dans une machine d'emballage (1), **caractérisé en ce qu'**au moins deux jetons (19a, 19b) sont agencés sur l'outil de scellage (10) de telle sorte que leur présence respective dans une première position de fonctionnement de l'outil de scellage (10) peut être détectée par des capteurs correspondants (20a, 20b) de la machine d'emballage (1) et ne peut pas être détectée dans une seconde position de fonctionnement, comprenant les étapes consistant à :
détecter un premier signal provenant d'un premier des au moins deux capteurs (20a, 20b) indiquant la présence d'un premier des au moins deux jetons (19a, 19b),
détecter un second signal provenant d'un second des au moins deux capteurs (20a, 20b) qui indique la présence d'un second des au moins deux jetons (19a, 19b),
surveiller les premier et second signaux,
détecter une première perte de signal de l'un des premier et second signaux,
détecter une seconde perte de signal de l'autre des premier et second signaux,
déterminer une différence de temps entre un moment de la première perte de signal et un moment de la seconde perte de signal ;
détecter une mauvaise position d'outil si la différence de temps déterminée dépasse une valeur prédéterminée.

6. Procédé selon l'une quelconque des revendications précédentes, comprenant en outre l'arrêt d'une opération de fermeture de l'outil de scellage (10) qui amène l'outil de scellage (10) de la première position de fonctionnement à la seconde position de fonctionnement si une mauvaise position d'outil a été détectée.

7. Machine d'emballage (1) comprenant un châssis (2) avec un dispositif de réception (17) pour un outil de scellage (10), dans laquelle l'outil de scellage (10) peut être monté de manière interchangeable,
**caractérisée en ce qu'**au moins deux capteurs (20a, 20b) sont agencés sur le dispositif de réception (17), qui sont configurés pour détecter la présence d'au moins deux jetons (19a, 19b) agencés sur l'outil de scellage (10) lorsque l'outil de scellage (10) est agencé dans une première position de fonctionnement, dans laquelle la présence des jetons (19a, 19b) dans une seconde position de fonctionnement de l'outil de scellage (10) ne peut pas être détectée par les capteurs (20a, 20b),
dans laquelle un premier des au moins deux capteurs (20a, 20b) est configuré pour délivrer en sortie un premier signal qui indique la présence détectée d'un premier des au moins deux jetons (19a, 19b), et un second des au moins deux capteurs (20a, 20b) est configuré pour délivrer en sortie un second signal qui indique la présence détectée d'un second des au moins deux jetons (19a, 19b), dans laquelle les capteurs (20a, 20b) sont configurés pour délivrer en sortie les premier et second signaux uniquement lorsque la présence du jeton respectif (19a, 19b) est détectée,
dans laquelle la machine d'emballage (1) est configurée pour surveiller le premier signal et le second signal, détecter une perte de signal de l'un des premier et second signaux et une période de temps qui s'est écoulée après la première perte de signal, dans laquelle la machine d'emballage (1) est en outre configurée pour détecter une mauvaise position d'outil si la période de temps détectée dépasse une valeur prédéterminée.

8. Machine d'emballage selon la revendication 7, dans laquelle la machine d'emballage (1) est configurée pour détecter une mauvaise position de l'outil uniquement si l'autre des premier et second signaux est encore présent lorsque la période de temps écoulée détectée a dépassé la valeur prédéterminée.

9. Machine d'emballage selon l'une quelconque des revendications 7 ou 8, dans laquelle la machine d'emballage (1) est configurée pour détecter une seconde perte de signal de l'autre des premier et second signaux.

10. Machine d'emballage selon la revendication 9, dans laquelle la machine d'emballage (1) est configurée pour terminer la détection de la période de temps une fois que la seconde perte de signal a été détectée, dans laquelle aucune mauvaise position d'outil n'est détectée si la détection de la période de temps est terminée avant d'avoir dépassé la valeur prédéterminée.

11. Machine d'emballage (1) comprenant un châssis (2) avec un dispositif de réception (17) pour un outil de scellage (10), dans laquelle l'outil de scellage (10) peut être monté de manière interchangeable,
**caractérisée en ce qu'**au moins deux capteurs (20a, 20b) sont disposés sur le dispositif de réception, qui sont configurés pour détecter la présence d'au moins deux jetons (19a, 19b) disposés sur l'outil de scellage (10) lorsque l'outil de scellage (10) est disposé dans une première position de fonctionnement, la présence des jetons (19a, 19b) dans une seconde position de fonctionnement de l'outil de scellage (10) ne pouvant pas être détectée par les capteurs (20a, 20b),
dans laquelle un premier des au moins deux capteurs (20a, 20b) est configuré pour émettre un premier signal indiquant la présence détectée d'un premier des au moins deux jetons (19a, 19b), et un second des au moins deux capteurs est configuré pour émettre un second signal indiquant la présence détectée d'un second des au moins deux jetons (19a, 19b), dans laquelle les capteurs (20a, 20b) sont configurés pour émettre les premier et second signaux uniquement lorsque la présence du jeton respectif (19a, 19b) est détectée,
dans laquelle la machine d'emballage (1) est configurée pour surveiller le premier signal et le second signal, pour détecter une première perte de signal de l'un des premier et second signaux et une seconde perte de signal de l'autre des premier et second signaux et pour déterminer une différence de temps entre un moment de la première perte de signal et un moment de la seconde perte de signal, dans laquelle la machine d'emballage (1) est en outre configurée pour détecter une mauvaise position d'outil si la différence de temps déterminée dépasse une valeur prédéterminée.

12. Machine d'emballage selon l'une quelconque des revendications 7 à 11, dans laquelle la machine d'emballage (1) est configurée pour arrêter une opération de fermeture de l'outil de scellage (1) qui amène l'outil de scellage (10) de la première position de fonctionnement à la seconde position de fonctionnement lorsqu'une position incorrecte de l'outil a été détectée.
